# EUROPÄISCHE PATENTANMELDUNG

(11) **EP 3 431 312 A1**
(43) Veröffentlichungstag der Anmeldung: **23.01.2019**
(21) Anmeldenummer: 18180112.7
(22) Anmeldetag: 27.06.2018
(51) Int. Cl.: B60C 23/04

(54) **VERFAHREN ZUM ZUORDNEN EINER REIFENDRUCKÜBERWACHUNGSEINEIT ZU EINER PADPOSITION EINES FAHRZEUGS**

(30) Priorität: 19.07.2017 DE 102017116299
(71) Anmelder: HUF Hülsbeck & Fürst GmbH & Co. KG, 42551 Velbert (DE)
(72) Erfinder: Wagner, Markus, 71638 Ludwigsburg (DE); Lonkeu, Gildas, 75177 Pforzheim (DE)
(74) Vertreter: Twelmeier Mommer & Partner

(57) **Zusammenfassung**

Beschrieben wird ein Verfahren zum Zuordnen einer an einem Rad eines Fahrzeugs montierten Reifendrucküberwachungseinheit zu einer Radposition eines Fahrzeugs, wobei die Reifendrucküberwachungseinheit Datentelegramme aussendet, die jeweils mehrere Datenpakete enthalten, wobei jedes Datenpaket eine für die Reifendrucküberwachungseinheit charakteristische Kennung, eine Druckinformation, und eine Lokalisierungsinformation, die aus einer Zeitmessung einer in der Reifendrucküberwachungseinheit enthalten Zeitmesseinrichtung und Signalen eines rotationssensitiven Sensors gewonnen wurde, enthält, wobei eine zentrale Auswerteeinheit die Lokalisierungsinformation von empfangenen Datenpaketen mit Daten von ABS-Sensoren vergleicht, die den Radpositionen des Fahrzeugs zugeordnet sind, wobei die zentrale Auswerteeinheit die Reifendrucküberwachungseinheit der Radposition des Fahrzeugs zuordnet, für welche die Lokalisierungsinformation am besten mit den Daten des dieser Radposition zugeordneten ABS-Sensors übereinstimmt. Erfindungsgemäß ist vorgesehen, dass die Zeitabstände zwischen dem Empfang von Datenpaketen eines Datentele-gramms gemessen werden wird, durch Auswertung der gemessenen Zeitabstände ein Gangfehler der Zeitmesseinrichtung ermittelt wird, und die Lokalisierungsinformation unter Verwendung des ermittelten Gangfehlers korrigiert wird, bevor sie mit den Daten von ABS-Sensoren verglichen wird.

## Beschreibung

Die Erfindung geht von einem Verfahren mit den Merkmalen des Oberbegriffs des Anspruchs 1 aus, wie es aus der DE 10 2010 037 512 A1 sowie der EP 2 470 512 A1 bekannt ist.

Reifendrucküberwachungssysteme bestehen aus an den Rädern eines Fahrzeugs montierten Reifendrucküberwachungseinheiten und einer zentralen Auswerteeinheit, die von den Reifendrucküberwachungseinheiten gesendete Funksignale mittels einer Antenne empfängt und auswertet, um dem Fahrer Anomalien des Reifendrucks anzuzeigen. Die Auswerteeinheit ist dazu im Allgemeinen mit einem im Armaturenbrett des Fahrzeugs vorgesehenen Display verbunden. Die Verbindungen zwischen der Auswerteeinheit und dem Display und gegebenenfalls zum Empfänger erfolgten üblicherweise über Kabel, z.B. über ein im Fahrzeug vorgesehenes BUS-System.

Damit die Auswerteeinheit anzeigen kann, an welchem Rad eine Anomalie des Reifendrucks auftritt, muss sie wissen, an welchem Rad sich eine Reifendrucküberwachungseinheit befindet, welche eine Anomalie des Reifendrucks signalisiert. Zu diesem Zweck übertragen die Reifendrucküberwachungseinheiten in ihren Signalen zusammen mit einer Information über den Reifendruck auch eine individuelle Kennung, bei der es sich üblicherweise um eine Ziffernfolge handelt. Damit die Auswerteeinrichtung eine ihr übermittelte Ziffernfolge einem bestimmten Rad bzw. einer bestimmten Radposition zuordnen kann, müssen ihr vorab die Kennungen der im Fahrzeug verbauten Reifendrucküberwachungseinheiten und deren Zuordnung zu den Radpositionen mitgeteilt und gespeichert werden.

Die Erfindung betrifft ein Verfahren zum Zuordnen von an Rändern eines Fahrzeugs montierten Reifendrucküberwachungseinheiten zu den Radpositionen des Fahrzeugs unter Verwendung der Daten von ABS-Sensoren, die den einzelnen Rädern zugeordnet sind.

Die an den Rädern des Fahrzeuges angebrachten Reifendrucküberwachungseinheiten enthalten jeweils einen Drucksensor, welcher auf den Reifendruck des Rades anspricht, eine Zeitmesseinrichtung, einen rotationssensitiven Sensor, beispielsweise einen Beschleunigungssensor, einen Speicher, in welchem eine individuelle Kennung der Radelektronik gespeichert ist, und einen Sender, welcher Datentelegramme an einen Empfänger überträgt, der mit einer an der Karosserie des Fahrzeugs vorgesehenen Antenne sowie mit einer Auswerteeinrichtung versehen oder verbunden ist. Die Datentelegramme bestehen jeweils aus zwei oder mehr Datenpaketen, die jeweils die individuelle Kennung der sendenden Reifendrucküberwachungseinrichtung sowie eine Druck- und eine Lokalisierungsinformation enthalten. Die Lokalisierungsinformation wird von einer zentralen Auswerteeinheit verwendet, um die Reifendrucküberwachungseinheit einer Radposition zuzuordnen.

Bei der Lokalisierungsinformation handelt es sich um eine Information, die aus einer Zeitmessung einer in der Reifendrucküberwachungseinheit enthalten Zeitmesseinrichtung und Signalen eines rotationssensitiven Sensors gewonnen wurde, beispielweise um die Drehfrequenz oder die Angabe, wann das Rad eine definierte Drehwinkelstellung erreicht hatte. Die zentrale Auswerteeinheit wertet die Lokalisierungsinformation aus und vergleicht diese mit Daten der ABS-Sensoren. Die Reifendrucküberwachungseinheit bzw. ihre Kennung wird dann der Radposition des Fahrzeugs zuordnet, für welche die Lokalisierungsinformation am besten mit den Daten des dieser Radposition zugeordneten ABS-Sensors übereinstimmt.

Die Lokalisierungsinformation kann beispielsweise die Drehfrequenz sein. Die Drehfrequenzen der einzelnen Räder eines Fahrzeugs unterscheiden sich nämlich geringfügig. Die Unterschiede der Drehfrequenzen können unterschiedliche Ursachen haben, z.B. Schlupf zwischen Rad und Fahrbahn, unterschiedliche Rollradien infolge unterschiedlicher Reifengrößen oder infolge unterschiedlicher Belastungen oder infolge unterschiedlicher Reifendrücke und insbesondere infolge von Kurvenfahrt; Räder auf der Kurvenaußenseite legen stets einen größeren Weg zurück als Räder auf der Kurveninnenseite und drehen sich deshalb schneller als die Räder auf der Kurveninnenseite. Wegen dieser Unterschiede kann auf der Grundlage der Drehfrequenzen eine Zuordnung der Reifendrucküberwachungseinheiten zu den verschiedenen Radpositionen eines Fahrzeugs erfolgen. Die von den ABS-Sensoren ermittelten Drehfrequenzen werden dazu mit den Drehfrequenzen verglichen, die auf der Grundlagen von Messungen des rotationssensitiven Sensors der betreffenden Reifendrucküberwachungseinheit ermittelt wurden.

Die Lokalisierungsinformation kann alternativ oder zusätzlich auch einen Zeitversatz zwischen dem Aussenden des Datentelegramms und dem Erreichen einer definierten Drehwinkelposition des Rades angeben. Die einzelnen Räder eines Fahrzeugs nehmen zu unterschiedlichen Zeiten eine bestimmte Drehwinkelstellung ein, beispielsweise eine Drehwinkelstellung, in der sich die Reifendrucküberwachungseinheit in einer 12 Uhr Position befindet, also ihren maximalen Abstand von der Straße hat. Die Drehwinkelstellung des Rades bzw. das Erreichen einer definierten Drehwinkelstellung kann von einem ABS-Sensor erfasst werden. Wenn die zentrale Auswerteeinheit weiß, wann die einzelnen Räder des Fahrzeugs jeweils die definierte Drehwinkelstellung eingenommen haben, kann somit auch auf dieser Grundlage eine Zuordnung einer Reifendrucküberwachungseinheit zu einer Radposition erfolgen. Wann das Rad einer gegebenen Radelektronik die definierte Drehwinkelstellung eingenommen hatte, kann die zentrale Auswerteeinheit aus dem Zeitversatz zwischen dem Aussenden des Datentelegramms und dem Erreichen der definierten Drehwinkelposition ermitteln.

Der Zeitversatz kann in dem ersten Datenpaket eines Datentelegramms als die Zeitspanne abgespeichert sein, die zwischen dem Erreichen der definierten Drehwinkelstellung und dem Beginn des Aussendens des ersten Datenpakets des Datentelegramms vergangen ist. In weiteren Datenpaketen dieses Datentelegramms kann die Zeitspanne angegeben sein, die zwischen dem Erreichen der definierten Drehwinkelstellung und dem Beginn des Aussendens des betreffenden Datenpakets des Datentelegramms vergangen ist. Alternativ kann aber auch jedes Datenpaket dieselbe Zeitspanne wie das erste Datenpaket enthalten. Wenn die Datenpakete in vorgegeben Zeitabständen ausgesendet werden und jeweils eine Paketinformation enthalten, aus der hervorgeht, wie viele Datenpakete in dem vorliegenden Datentelegramm vor dem aktuellen Datenpaket gesendet wurden, kann die zentrale Auswerteeinheit damit die zum Vergleich mit den ABS-Daten erforderliche Zeitinformation gewinnen. Die Paketinformation kann beispielsweise die Nummer des betreffenden Datenpakets angeben, also ein Zahl sein, die für jedes weitere Datenpaket um eins erhöht wird und jeweils mit dem ersten Datenpaket eines Datentelegramms zurück gesetzt wird.

Ständiges Ziel bei der Entwicklung von Reifendrucküberwachungssystemen ist es, nach jedem Fahrtbeginn eine möglichst schnelle Zuordnung der Reifendrucküberwachungseinheiten zu den verschiedenen Radpositionen zu ermöglichen. Probleme bereiten dabei unter anderem Ungenauigkeiten der Lokalisierungsinformation, so dass für eine Zuordnung einer Reifendrucküberwachungseinheit zu einer Radposition statistische Betrachtungen angestellt werden müssen, also mehrere Datentelegramme benötigt werden. Hinzu kommen häufig problematische Übertragungsbedingungen, die dazu führen, dass nicht jede Sendung einer Reifendrucküberwachungseinheit empfangen wird. Es ist deshalb erforderlich, jedes Datentelegramm in Form von mehreren weitestgehend redundanten Datenpaketen zu übertragen, so dass für eine erfolgreiche Datenübertragung nicht alle Datenpakte eines Datentelegramms empfangen werden müssen.

Aufgabe der vorliegenden Erfindung ist es einen Weg aufzuzeigen, wie bei einem kostengünstigen Reifendrucküberwachungssystem bei Fahrtbeginn schnell eine Zuordnung der Reifendrucküberwachungseinheiten zu den Radpositionen eines Fahrzeugs erfolgen kann.

Diese Aufgabe wird durch ein Verfahren mit den im Anspruch 1 angegebenen Merkmalen gelöst. Vorteilhafte Weiterbildungen der Erfindung sind Gegenstand der Unteransprüche.

Bei dem erfindungsgemäßen Verfahren wird die Genauigkeit der Lokalisierungsinformation, die aus einer Zeitmessung einer in der Reifendrucküberwachungseinheit enthalten Zeitmesseinrichtung und Signalen eines rotationssensitiven Sensors gewonnen wurde, erhöht, indem ein eventueller Gangfehler der Zeitmesseinrichtung der Reifendrucküberwachungseinheit korrigiert wird.

Wenn die Lokalisierungsinformation die Drehfrequenz des Rades ist, wird diese ermittelt indem mit dem rotationssensitiven Sensor Beginn und Ende einer Periodendauer festgestellt und mit der Zeitmesseinrichtung die zwischen Beginn und Ende verstrichene Zeit gemessen wird. Ein Messfehler der Zeit wegen eines Gangfehlers der Zeit führt also zu einem entsprechenden Fehler in der Drehfrequenz.

Wenn die Lokalisierungsinformation den Zeitversatz zwischen dem Aussenden des Datentelegramms und dem Erreichen einer definierten Drehwinkelposition des Rades angibt, führt ein Gangfehler der Zeitmesseinrichtung dazu, dass ein falschen Zeitpunkt für die definierte Drehwinkelposition angenommen und dementsprechend eine schlechtere Übereinstimmung mit dem entsprechenden Signal eines ABS-Sensors erzielt wird.

Eine größere Genauigkeit der Lokalisierungsinformation führt dazu, dass bereits mit weniger Datentelegrammen ausreichende Informationen gewonnen werden können, um eine Zuordnung der Reifendrucküberwachungseinrichtungen zu den einzelnen Radpositionen mit einer ausreichend hohen Zuverlässigkeit vornehmen zu können. Zudem ermöglicht die Korrektur eines Gangfehlers der Zeitmesseinrichtung der Reifendrucküberwachungseinheit den Einsatz von weniger genauen und deshalb kostengünstigeren Zeitmesseinrichtungen, beispielsweise von RC-Schaltungen statt Schwingquarzen. Zeitmesseinrichtungen in einer Reifendrucküberwachungseinrichtung sind erheblichen Temperaturschwankungen und Temperaturbelastungen sowie mechanischen Belastungen durch Beschleunigungskräfte unterworfen, so dass sich eine präzise Zeitmesseinrichtung in einer Reifendrucküberwachungseinrichtung nur mit Einschränkungen oder erheblichen Kosten realisieren lässt.

Um den Gangfehler der Zeitmesseinrichtung der Reifendrucküberwachungseinrichtung zu korrigieren, muss die zentrale Auswerteeinheit wenigstens zwei Datenpakete eines Datentelegramms empfangen und den Zeitabstand zwischen diesen Datenpaketen messen und auswerten.

Wenn die Datenpakete in vorgegebenen Zeitabständen ausgesendet werden, kann die zentrale Auswerteeinheit die gemessenen Zeitabstände mit den vorgegebenen Zeitabständen vergleichen. Eine Abweichung beruht dann auf einem Gangfehler der in der Reifendrucküberwachungseinrichtung enthaltenen Zeitmesseinrichtung, kann also erkannt und korrigiert werden.

Selbst wenn Datenpakete in variablen Zeitabständen gesendet werden, die der zentralen Auswerteeinheit nicht unmittelbar bekannt sind, sondern von der Reifendrucküberwachungseinheit festgelegt werden, kann die zentrale Auswerteeinheit durch Auswertung der gemessenen Zeitabstände einen Gangfehler der Zeitmesseinrichtung der Reifendrucküberwachungseinrichtung erkennen und korrigieren. Beispielsweise indem der zentralen Auswerteeinheit die Kriterien bekannt sind, nach denen die Reifendrucküberwachungseinheit die Zeitabstände festlegt, in denen die Datenpakete eines Datentelegramms ausgesendet werden.

Unabhängig davon kann ein Gangfehler der in der Reifendrucküberwachungseinrichtung enthaltenen Zeitmesseinrichtung beispielsweise auch an der Lokalisierungsinformation selbst erkannt und in Verbindung mit den gemessenen Zeitabständen des Empfangs der Datenpaket korrigiert werden, beispielsweise wenn die Lokalisierungsinformation angibt, wie viel Zeit zwischen dem Aussenden des Datenpakets und dem Erreichen einer definierten Drehwinkelstellung des Rades vergangen ist. Wenn beispielweise die Lokalisierungsinformation eines Datenpaketes angibt, dass zwischen dem Erreichen einer definierten Drehwinkelstellung und dem Aussenden des ersten Datenpaketes eine Zeitspanne Δ1 bzw. zwischen dem Erreichen der definierten Drehwinkelstellung und dem Aussenden des zweiten Datenpaketes eine Zeitspanne Δ2 vergangen ist und die Datenpakete zu Zeiten t1 bzw. t2 empfangen wurden, beruht eine Abweichung zwischen der Differenz der Empfangszeiten t2-t1 der Datenpakete von der Differenz Δ2-Δ1 auf dem Gangfehler der in der Reifendrucküberwachungseinheit enthaltenen Zeitmesseinrichtung.

Die zentrale Auswerteeinheit ist im Gegensatz zu den Reifendrucküberwachungseinrichtungen keinen nennenswerten Temperaturschwankungen, Temperaturbelastungen oder Beschleunigungskräften ausgesetzt und kann deshalb ohne Schwierigkeiten und kostengünstig mit einer präzisen Zeitmesseinrichtung, beispielsweise mit einem Schwingquarz ausgerüstet werden. Alternativ ist es auch möglich, dass die zentrale Auswerteeinheit auf eine andere Zeitmessungseinheit des Fahrzeugs zugreift und beispielsweise vom Motorsteuergerät mit einem präzisen Takt und somit einer Zeitmessung versorgt wird.

Weitere Einzelheiten und Vorteile der Erfindung werden an einem Ausführungsbeispiel unter Bezugnahme auf die beigefügte Zeichnung erläutert.

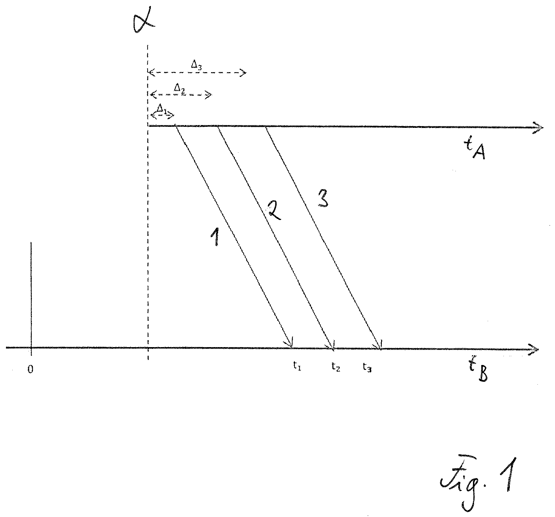

Fig. 1 zeigt schematisch die Verhältnisse der Zeitmessungen einer Reifendrucküberwachungseinheit für die Übertragung von drei Datenpaketen eines Datentelegramms.

In Fig. 1 gibt der Pfeil t_{A} die Zeitachse der Zeit an, die von der Zeitmesseinrichtung der Reifendrucküberwachungseinheit gemessen wird. Der dazu parallel verlaufende Pfeil t_{B} gibt die Zeitachse der Zeit an, die von einer Zeitmesseinrichtung der zentralen Auswerteeinheit gemessen wird.

Die Reifendrucküberwachungseinheit sendet ein Datentelegramm aus, das aus zwei oder mehr Datenpaketen besteht, beispielsweise drei Datenpaketen 1, 2, 3. Jedes dieser Datenpakete enthält die charakteristische Kennung der Reifendrucküberwachungseinheit, eine Druckinformation, und eine Paketinformation, die angibt um das wievielte Datenpaket des Telegramms es sich handelt bzw. wie viele Datenpakete in dem vorliegenden Datentelegramm vor dem aktuellen Datenpaket gesendet wurden. Dementsprechend enthält also das erste Datenpaket 1 die Paketinformation eins, das zweite Datenpaket 2 die Paketinformation zwei und das dritte Datenpaket 3 die Paketinformation 3. Auf eine Paketinformation kann verzichtet werden, wenn die Datenpakete jeweils eine Zeitgabe enthalten, die sich zur Kompensation eines Gangfehlers verwenden lässt, z.B. die jeweils seit dem Erreichen einer definierten Drehwinkelstellung vergangene Zeitspanne.

Zusätzlich enthalten die Datenpakete als Lokalisierungsinformation die Angabe, wie viel Zeit vergangen ist, seit das Rad die definierte Drehwinkelstellung α erreicht hat, beispielsweise eine Drehwinkelstellung, bei der die Reifendrucküberwachungseinrichtung maximalen Abstand von der Straße hat. Die Lokalisierungsinformation ist in Figur 1 für das erste Datenpaket 1 als Zeitspanne Δ1 angeben, also die Zeit, die zwischen dem Erreichen der definierten Drehwinkelstellung α und dem Beginn des Aussendens des ersten Datenpakets 1 vergangen ist.

Das zweite Datenpaket und das dritte Datenpaket können als Lokalisierungsinformation dementsprechend die Zeitspannen Δ2 bzw. Δ3 enthalten, die angeben, wie viel Zeit zwischen dem Erreichen der definierten Drehwinkelstellung α und dem Beginn des Aussendens des zweiten bzw. dritten Datenpakets vergangen ist. Alternativ können das zweite und das dritte Datenpaket aber auch ebenso wie das erste Datenpaket die Zeitangabe Δ1 enthalten. Da die Datenpakete eines Datentelegramms in vorgegebenen Zeitabständen ausgesandt werden, kann die zentrale Auswerte mit der Paketinformation, d.h. der Nummer des Datenpakets, aus der Zeitangabe Δ1 auch die Zeitangaben Δ2 sowie Δ3 berechnen und umgekehrt.

Um die charakteristische Kennung der Reifendrucküberwachungseinheit einer Radposition zu zuordnen, kann die zentrale Auswerteeinheit den aus den Zeitangaben Δ1 bzw. Δ2 oder Δ3 ermittelten Zeitpunkt, zu dem das Rad die definierte Drehwinkelstellung α hatte, mit entsprechenden Daten der ABS-Sensoren des Fahrzeugs vergleichen und die Reifendrucküberwachungseinheit der Radposition zuordnen, für die der ABS-Sensor zum selben Zeitpunkt die definierte Drehwinkelstellung α erfasst hat. Tatsächlich ist eine perfekte Übereinstimmung wegen verschiedener Messfehler aber nicht zu erwarten, so dass für eine Zuordnung mehrere Datentelegramme ausgewertet werden müssen und die Zuordnung dann auf einer Statistik zu der Radposition erfolgt, für welche die mittlere Abweichung minimal ist.

Eine Fehlerquelle, welche die Lokalisierungsinformation beeinträchtigt, ist ein Gangfehler der in der Reifendrucküberwachungseinrichtung enthaltenen Zeitmesseinrichtung. Wenn diese Zeitmesseinrichtung, also die Uhr der Reifendrucküberwachungseinheit, um x% zu schnell oder zu langsam geht, sind die Zeitangaben Δ1 bzw. Δ2 oder Δ3 entsprechend um x% zu groß oder zu klein.

Die zentrale Auswerteeinheit kann diesen Fehler korrigieren, indem mehrere Datenpakete eines Datentelegramms ausgewertet werden. Die zentrale Auswerteeinheit empfängt die Datenpakte 1, 2, 3 zu Zeitpunkten t1, t2 und t3. Wenn die Datenpakete in vorgegeben Zeitabständen ausgesendet werden, deren Einhaltung von der Zeitmesseinrichtung der Reifendrucküberwachungseinrichtung überwacht wird, kann die zentrale Auswerteeinheit die Ganggenauigkeit dieser Zeitmesseinrichtung mittels der Zeitpunkte t1, t2, t3 ermitteln. Wenn beispielsweise die Differenz t2-t1 von dem vorgegebenen Zeitabstand abweicht, kann diese Abweichung auf die Gangungenauigkeit der Zeitmesseinrichtung zurückgeführt somit die Gangungenauigkeit quantifiziert werden, so dass die Lokalisierungsinformation Δ1 korrigiert werden kann.

Alternativ kann der Gangfehler auch ermittelt werden, indem die Differenz Δ2-Δ1 mit der Differenz t2-t1 verglichen wird. Eine Abweichung kann dabei auf einen Gangfehler der in der Reifendrucküberwachungseinheit enthaltenen Zeitmesseinrichtung zurückgeführt werden, so dass der Gangfehler in der Lokalisierungsinformation korrigiert werden kann. Ebenso kann die Differenz Δ3-Δ2 mit der Differenz t3-t2 oder die Differenz Δ3-Δ1 mit der Differenz t3-t1 verglichen werden, um den Gangfehler der Zeitmesseinrichtung in der Reifendrucküberwachungseinrichtung zu erkennen und zu korrigieren.

Die zentrale Auswerteeinheit nimmt die Zuordnung der Reifendrucküberwachungseinrichtung zu einer Radposition dann auf der Grundlage der korrigierten Lokalisierungsinformation vor.

## Patentansprüche

1. Verfahren zum Zuordnen einer an einem Rad eines Fahrzeugs montierten Reifendrucküberwachungseinheit zu einer Radposition eines Fahrzeugs,
wobei die Reifendrucküberwachungseinheit Datentelegramme aussendet, die jeweils mehrere Datenpakete enthalten,
wobei jedes Datenpaket eine
- für die Reifendrucküberwachungseinheit charakteristische Kennung,
- eine Druckinformation, und
- eine Lokalisierungsinformation, die aus einer Zeitmessung einer in der Reifendrucküberwachungseinheit enthalten Zeitmesseinrichtung und Signalen eines rotationssensitiven Sensors gewonnen wurde, enthält,
wobei eine zentrale Auswerteeinheit die Lokalisierungsinformation von empfangenen Datenpaketen mit Daten von ABS-Sensoren vergleicht, die den Radpositionen des Fahrzeugs zugeordnet sind,
wobei die zentrale Auswerteeinheit die Reifendrucküberwachungseinheit der Radposition des Fahrzeugs zuordnet, für welche die Lokalisierungsinformation am besten mit den Daten des dieser Radposition zugeordneten ABS-Sensors übereinstimmt,
**dadurch gekennzeichnet, dass**
die Zeitabstände zwischen dem Empfang von Datenpaketen eines Datentelegramms gemessen werden wird,
durch Auswertung der gemessenen Zeitabstände ein Gangfehler der Zeitmesseinrichtung ermittelt wird, und
die Lokalisierungsinformation unter Verwendung des ermittelten Gangfehlers korrigiert wird, bevor sie mit den Daten von ABS-Sensoren verglichen wird.

2. Verfahren nach Anspruch 1, **dadurch gekennzeichnet, dass** die Lokalisierungsinformation die Drehfrequenz ist.

3. Verfahren nach Anspruch 1, **dadurch gekennzeichnet, dass** die Lokalisierungsinformation einen Zeitversatz zwischen dem Erreichen einer definierten Drehwinkelposition des Rades und dem Aussenden des Datentelegramms angibt.

4. Verfahren nach einem der vorstehenden Ansprüche, **dadurch gekennzeichnet, dass** jedes Datentelegramm drei Datenpakete enthält.

5. Verfahren nach einem der vorstehenden Ansprüche, **dadurch gekennzeichnet, dass** die Datenpakete jeweils eine Paketinformation enthalten, aus der hervorgeht, wie viele Datenpakete in dem vorliegenden Datentelegramm vor dem aktuellen Datenpaket gesendet wurden.

6. Verfahren nach einem der vorstehenden Ansprüche, **dadurch gekennzeichnet, dass** die Datenpakete in vorgegebenen Zeitabständen ausgesendet werden, deren Einhaltung mittels der in der Reifendrucküberwachungseinheit enthalten Zeitmesseinrichtung überwacht wird.

7. Verfahren nach einem der vorstehenden Ansprüche, **dadurch gekennzeichnet, dass** durch Vergleich der gemessenen Zeitabstände mit den vorgegebenen Zeitabständen ein Gangfehler der Zeitmesseinrichtung ermittelt wird.
